Europäisches Patentamt

European Patent Office

Office européen des brevets

(11) Publication number: **0 163 810 B1**

## EUROPEAN PATENT SPECIFICATION

(45) Date of publication of patent specification: **15.04.92**

(21) Application number: **85101901.8**

(22) Date of filing: **21.02.85**

(51) Int. Cl.⁵: **G11B 7/24**, G11B 13/04, G11B 11/10, G11B 5/64, H01F 10/30

(54) **Optical information recording carrier.**

(30) Priority: **22.02.84 JP 32230/84**

(43) Date of publication of application:
**11.12.85 Bulletin 85/50**

(45) Publication of the grant of the patent:
**15.04.92 Bulletin 92/16**

(84) Designated Contracting States:
**DE FR GB NL**

(56) References cited:
**EP-A- 0 051 296**
**EP-A- 0 079 229**
**EP-A- 0 126 594**
**GB-A- 2 026 901**

(73) Proprietor: **DAICEL CHEMICAL INDUSTRIES, LTD.**
**No. 1-Banchi, Teppo-cho**
**Sakai-shi Osaka-fu 590(JP)**

(72) Inventor: **Tsukane, Nagayoshi**
**1903-3, Okihama Aboshiku**
**Himeji-shi Hyogo-ken(JP)**
Inventor: **Sato, Masaru**
**500, Kamiyobe Yobe-ku**
**Himeji-shi Hyogo-ken(JP)**

(74) Representative: **Boeters, Hans Dietrich, Dr. et al**
**Boeters & Bauer Bereiteranger 15**
**W-8000 München 90(DE)**

EP 0 163 810 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns a high-density information recording carrier for use in optical recording and reproducing apparatus to carry out information recording and reproduction by the use of laser beams and, more specifically, it relates to a high density information recording carrier made of plastic of outstanding durability and further to a high density information recording carrier for magneto-optic recording and reproduction with excellent magneto-optic characteristics.

Optical information recording carriers include those discs exclusively used for reproduction such as video discs and digital audio discs, so called DRAW discs which are capable of writing, and further so-called E-DRAW discs which are capable of writing, erasing and rewriting such as magneto optic discs. They are produced or manufactured by a method of preparing a stamper from an original disc engraved with signals or guide tracks, molding a copy disc made of plastic from the stamper, to obtain a plastic substrate having a surface containing signals or guide tracks, and forming thereon various types of functional membranes. The signals contained in the recording surface comprise those bits corresponding to digital signals or analog signals in the case of read only memory discs, and bits and guide tracks corresponding to signals for use in addresses and error correction in the case of above-mentioned DRAW and E-DRAW discs. The bits have each 0.5 - 0.8 $\mu$m width, 0.5- 2.0 $\mu$m length and 0.06 - 1.2 $\mu$m depth and the guide grooves have each 0.5 - 1.0 $\mu$m width and 0.06 - 1.2 $\mu$m depth. The guide groove may be formed in a single stage or multiple stages in height. The functional membranes to be formed comprise a reflecting metal membrane such as aluminum coated by vapor deposition, sputtering or ion-plating on the recording surface of the plastic substrate in the case of the read only memory discs and comprise aluminum, chromium, lead, gold, rhodium, zinc, copper, antimony, tellurium, indium, bismuth, carbon disulfide - tellurium, tellurium carbide, tellurium arsenide, thin pigment membrane, silver + polymer or the like coated as a recording medium in the case of DRAW discs. Further, in the case of the E-DRAW discs, phase transformable material such as tellurium oxide, magnetic membrane made of manganese - bismuth, gadolinium - cobalt, iron - terbium, iron - terbium - gadolinium, iron - terbium - cobalt, or a semiconductor membrane such as arsenic - selenium - sulfer - germanium is coated on a plastic substrate by means of sputtering, ion-plating or the like. Usually, metal for the purpose of reflection and/or inorganics such as silicon oxide or polymeric material such as acryl and epoxy for the purpose of protection is often coated further on the above-mentioned metal material.

Generally, the above-mentioned functional membranes are usually formed on a glass substrate by means of sputtering or vapor deposition. Such a glass material is used as the substrate, because it exhibits :

(1) high optical transmittance,

(2) high heat conduction and low heat expansion coefficient,

(3) no hygroscopic deformation at all, and

(4) good bondability with the recording layer, or the like.

However, it is difficult to manufacture , heavy and easily cracked, difficult to equip with guide tracks and unsuitable for mass production.

On the other hand, those plastics such as polymethylmethacrylate and polycarbonate are practically desirable as the substrate for the information recording discs, because they have optical transmittance of about 90 % and can provide inexpensive substrates in a great quantity by means of injection molding or the like.

However, these plastic substrates are relatively soft, show a considerable heat expansion coefficient and, in addition, exhibit relatively large hygroscopic deformation. Particularly, the hygroscopic deformation results in appreciable problems in the optical recording and reproduction of information. Further, the recording layer is inevitably deteriorated by oxidation due to oxygen permeating through the substrate which is gas permeable. Attempts to eliminate the foregoing drawbacks, by coating organic silanes, or forming oxides such as $SiO_2$ through sputtering or the like on the substrate, have not been completely satisfactory. This is, because it is necessary for the organic silanes to be immersed or spin coated using a solvent and, thereafter, cured at about 90 °c, which causes deformation to the plastic substrate. On the other hand, formation of inorganic oxides such as $SiO_2$ through sputtering generates pin holes making it difficult to completely block out moisture and oxygen. Reference is made to EP-A-0 051 296 as an example.

EP-A-0 079 229 illustrates a disc record comprising a substrate of aluminum, a spacer of glass and a gold absorber film.

EP-A-2 026 901 is concerned with a thermal recording element and mentions as materials for the protective layer several inorganic materials, inter alia $SiO_2$ but is silent on glass. There has still been a demand for improving said prior art.

(Object of the Invention)

An object of this invention is to provide an optical information recording carrier which is stable for a long time, with a view to overcome the foregoing problems in the prior art, by making the plastic substrate glass-like thereby improving the smoothness, hardness, hygroscopic deformation and gas permeability, thereby preventing the degradation of the functional membranes caused from the substrate.

Another object of this invention is to provide an optical information recording carrier with significantly improved magneto-optic characteristic in a magneto-optic recording carrier using rare earth - transition metal amorphous alloy as the functional membrane.

(Constitution of the Invention)

The first feature of this invention resides in an optical information recording carrier comprising
(a) a substrate made of transparent modable plastic (polymethylmethacrylate being excluded),
(b) a high-density information recording layer made of rare earth/transition metal amorphous alloy disposed on said substrate and
(c) a thin film layer having a thickness between 10 to 200 nm (100 to 2000 Å) made of a non-alkali inorganic glass (quartz glass being excluded) and disposed between the substrate and said high density-information recording layer.

The constitution of a high-density information recording carrier for use in the optical information recording system (hereinafter simply referred to as an optical disc) is first explained.

4. Brief Description of the Drawings

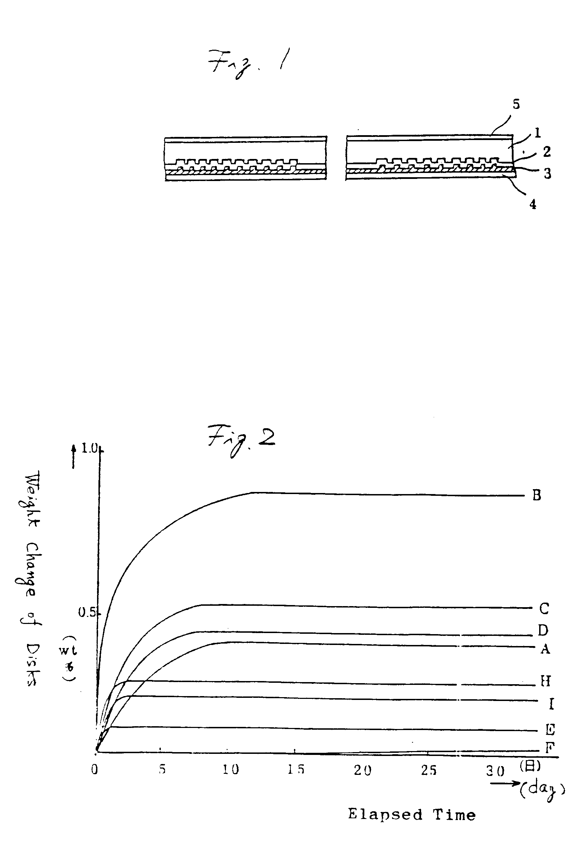

Figure 1 is a conceptional cross sectional view showing the structure of an optical disc, Figure 2 is a graph showing the relationship between the increment in the weight (wt%) of the optical disc and the days elapsed under the condition of 45°C and 90 RH%, in which each of curves A - I shows the symbol of the sample indicated in Table 1.

Figure 1 shows a general structure of an optical disc, which comprises a substrate 1 made of transparent plastic, a protection layer 2, a recording medium layer 3, a surface protection layer 4 and, optionally, an outer surface protection layer 5.

The above-mentioned substrate 1 may be prepared from any transparent plastic such as acrylic resin, polycarbonate resin, styrenic resin, vinyl chloride resin or the like, the acrylic resin and the polycarbonate resin being generally preferred in view of lower birefringence and higher moldability and stability.

Any known medium such as for use in DRAW discs and erasable-DRAW discs may be used as the high density information recording medium layer 3.

While oxides such as $SiO_2$ and $TiO_2$ or organic polymers such as organo siloxane have heretofore been used as the protection layer 2, it is a feature of this invention to use inorganic glass as the protection layer 2.

The thickness of the inorganic glass layer 2 can be between 100 - 2000 Å (10 - 200 nm). If the thickness is less than 100 Å no sufficient protective effect can be obtained and, on the other hand, if it is more than 2000 Å, it creates an economic disadvantage and a problem of absorption for laser beams or the like. The inorganic glass layer 2 can be formed by means of physical vapor deposition (PVD) method such as vapor deposition, sputtering and ion-plating.

Non-alkali glass is particularly preferred as the inorganic glass. Non-alkali glass is commercially available, for example, from Corning Glass Works as Code No. 7059 which contains a composition of $SiO_2$ : 49.9 %, BaO : 25.1 %, $B_2O_3$ : 10.5 %, $Al_2O_3$ : 10.3 % and CaO : 4.3 %. However, the inorganic glass for use in this invention is not limited only thereto but any material may be used so long as it can be formed into a thin film by means of the physical vapor deposition method.

The inorganic glass layer in this invention may be used not only as the protection layer between the plastic substrate 1 and the recording layer 3 but also as the outer protection layer 4 on the outer surface of the recording layer 3 and, further, it may also be used as the outer surface protection layer 5 for the plastic substrate 1.

The inorganic glass layer in this invention exhibits excellent properties, in particular, hygroscopic resistance,over the conventional protection membranes made of $SiO_2$, $TiO_2$ or the like as shown in the examples described below.

The second feature of this invention resides in that the high density information recording layer is made of rare earth - transition metal amorphous alloy.

That is, in view of the necessity of higher density and high speed access resulting from the recent increase in the amount of information, the layer of amorphous alloys in combination of rare earth metal and transition metal such as TbFe, TbFeCo and GdTbFe have remarkably attracted attention as the high density information recording medium capable of recording, reproduction and erasing,having an easy magnetization axis in the direction vertical to the surface of the membrane. The information recording discs as described above have application uses in document files, video files, movie memories and computer memories, in which reduction in the error rate and the improvement in the SN ratio provide important problems for the increase in the accuracy thereof.

Among the factors which cause the foregoing problems, those fundamental factors attributable to the recording medium include :
(1) non-uniformity of the film thickness and alloy composition.
(2) non-uniformity of the magnetic property
(3) oxidative degradation.
These factors are to a great extent dependent on the purity, smoothness or scratches on the substrates and form a bar to providing information recording discs of high performance.

The above factors (1) - (3) can be avoided simultaneously by disposing the inorganic glass layer 2 according to this invention between the plastic substrate 1 and the recording medium layer 3 made of the rare earth - transition metal amorphous alloy in order to obtain a practical magneto-optic recording carrier (hereinafter referred to magneto-optic disc)

The magneto-optic recording medium to which this invention is applicable may be of any known rare earth - transition metal amorphous alloys and they can include, for example, Tb-Fe type alloy (Japanese Patent Publication No. 20691/1982), Dy-Fe type alloy (Japanese Patent Publication No. 20692/1982), Gd-Tb-Fe type alloy (Japanese Patent Laid-Open No. 126907/1981), Gd-Tb-Dy-Fe type alloy (Japanese Patent Laid-Open No. 94948/1982), Gd-Co (Japanese Patent Laid-Open No. 121719/1979) and Tb-Fe-Co type. It is preferred to form these rare earth - transition metal amorphous layers on the inorganic glass layer according to this invention by means of vapor deposition, sputtering, ion-plating or the like. The thickness of the amorphous layer is generally between 500 - 1500 Å (50 - 150 nm).

The composition and the thickness of the inorganic glass layer according to this case are the same as those described above.

Prior research has mainly been directed to the formation of an amorphous layer on a glass plate and the vertically magnetizable amorphous layer can be formed stably on the glass plate. But, it was impossible or very difficult in the case of the plastic substrate to form an amorphous layer capable of vertical magnetization thereon, and hence no technique that can form the vertically magnetizable amorphous layer stably on a plastic substrate has yet been established. That is, although Kerr rotation angle of greater than 0.3 degree can be obtained on the glass substrate, the Kerr rotational angle only of about 0.1 degree can be obtained in the case of the plastic substrate. If those with the Kerr rotational angle of more than 0.2 degree can incidentally be obtained, they are poor in long term stability and lack in the reproducibility. Accordingly, there has been a strong demand for a technique capable of forming a stable vertically magnetizable amorphous on a plastic substrate ease to handle with, instead of conventional glass or aluminum substrates.

In this invention, a practicable magneto optical disc is prepared by forming the inorganic glass layer 2 which makes the surface of the plastic substate on which the amorphous layer could not be formed stably compared with the said glass substrate.

The magneto-optic disc according to this invention exhibits substantially the same C/N ratio as the conventional magneto-optic disc using the glass substrate.

While this invention will now be described referring to a magneto-optic disc as an example, this invention is similarly applicable to other known DRAW type discs. The magneto-optic medium has been selected here as the example, because the requirements particularly, as to the moisture-proof properties are much more stringent for the magneto-optic recording medium than the DRAW type medium and, accordingly, if it can satisfy the requirement for the magneto-optic recording medium, it will be adequate for the DRAW type medium.

This invention will now be described referring to examples.

Comparative Example 1

An inorganic glass layer of 500 Å (50 nm) film thickness was formed on a substrate made of polymethylmethacrylate with 1.2 mm thickness, by using a glass target comprising non-alkali glass available from Corning Glass Works as Code Nr. 7059 (Composition : $SiO^2$ : 49.9 %, $3_2O_3$ : 10.5 %, CaO : 4.3 %, $3aO$ : 25.1 %, $Al_2O_3$ : 10.3 %) and using a sputtering device (manufactured by Nippon Shinku Gijutsu K.K., RF Magnetron Sputtering Device). A recording medium layer composed of $Gd_{0.12}Tb_{0.12}Fe_{0.76}$ was further formed to a thickness of 1000 Å (100 nm) on the inorganic glass layer by using the above-mentioned sputtering device, and an outer surface protection layer (1000 Å) (100 nm) composed of non-alkali glass available from Corning Co was further formed thereover in the same manner as described above.

As shown in Table 1 and Figure 2, the results obtained were better that those of conventional protection layers made of $TiO_2$ and $SiO_2$.

Example 1

A magneto-optic disc was prepared in exactly the same manner as in Comparative Example 1 except for replacing the transparent plastic material with polycarbonate. As shown in Table 1 and Figure 2, the results obtained were excellent compared with those using the acrylic substrate in Comparative Example 1 and conventional $TiO_2$ and $SiO_2$.

Example 2

An outer surface protection layer (1000 Å) (100 nm) made of the same non-alkali glass as available from Corning Glass Works as Code No. 7059 was further formed in the same manner as described above to the outer surface of the polycarbonate substrate at the opposite side to the recording medium layer in the magneto-optic disc as prepared in Example 1.

Referring to the properties of the magneto-optic disc thus obtained, the long time stability and magneto optical property were further improved as shown in Table 1 and Figure 2.

Comparative Examples 2 - 6

Magneto-optic discs were prepared in the same manner as in Comparative Example 1 and Example 1 except for forming known $TiO_2$ and $SiO_2$, instead of the inorganic glass layer according to this invention, on the substrate of polymethylmethacrylate and polycarbonate, in the layer structure each as shown in Table 1.

As shown in Table 1 and Figure 2, the properties of the magneto-optic discs thus obtained were inferior to those of this invention.

Table 1

| Sample No. | Optical disc layer structure | | | | | Transmittance (%) | Pencil hardness | Bondability | Water absorption variation (wt%) | C/N variation (%) |
|---|---|---|---|---|---|---|---|---|---|---|
| | Outer surface protection layer | Substrate | Intermediate protection layer | Recording medium | Surface protection layer | | | | | |
| A Comparative Example 1 | — | PMMA | glass | Am | glass | 89 | 6 H | © | 0.4 | 87 |
| B Comparative example 2 | — | PMMA | — | Am | $TiO_2$ | 92 | 5 H | △ | 0.85 | 20 |
| C " 3 | — | PMMA | $TiO_2$ | Am | $TiO_2$ | 90 | 5 H | △ | 0.55 | 50 |
| D " 4 | — | PMMA | $SiO_2$ | Am | $SiO_2$ | 90 | 5 H | △ | 0.45 | 50 |
| E Example 1 | — | PC | glass | Am | glass | 89 | 6 H | © | 0.08 | 90 |
| F " 2 | glass | PC | glass | Am | glass | 88 | 6 H | © | 0.02 | 100 |
| G Blank | — | PC | — | — | — | 90 | HB | — | 2.5 | — |
| H Comparative example 5 | — | PC | $TiO_2$ | Am | $TiO_2$ | 89 | 5 H | △ | 0.25 | 70 |
| I " 6 | — | PC | $SiO_2$ | Am | $SiO_2$ | 89 | 5 H | △ | 0.20 | 70 |

(Note)

1. In the column of the layer structure :

Glass = non-alkali glass available from Corning Glass Works as Code No. 7059.

PMMA = Polymethylmethacrylate

PC = Polycarbonate

Am = Amorphous alloy ($Gd_{0.12}Tb_{0.12}Fe_{0.76}$)

2 . Pencil hardness :   Hardness of the substrate or

protection layer.

3. Bondability ;   10 x 10 cm area of the protection layer

was grooved using a cutter to divide into 100

sections, over which an adhesion tape (Nitto Tape

#29) was appended, and the bondability was

calculated by the number of remaining unit

sections (1 $cm^2$) after peeling.

◎  great bondability   △  medium bondability

4. Water absorption variation :

Increment in the weight after the elapse of 30

days under the condition of 45°C and 90 RH%.

5. C/N variation :

The relative value for C/N ratio to the initial

value 100 after the elapse of 30 days under

condition of 45°C and 90 RH%.

7

```
(reference in the drawing :)

1 ... plastic substrate

2 ... protection layer

3 ... recording medium layer

4 ... surface protection layer

5 ... outer surface protection layer
```

**Claims**

1. An optical information recording carrier comprising
   (a) a substrate made of tranparent moldable plastic (1), polymethylmethacrylate being excluded,
   (b) a high-density information recording layer (3) made of rare earth/transition metal amorphous alloy, disposed on said substrate and
   (c) a thin film layer (2) having a thickness between 10 to 200 nm (100 - 2000 Å) made of a non-alkali inorganic glass, quartz glass being excluded, and disposed between said substrate and said high density-information recording layer.

2. The optical information recording carrier as defined in claim 1 wherein a surface protection layer (4) made of inorganic glass is further formed on the surface of the high-densitiy information recording layer at the side opposite to the layer of inorganic glass.

3. The optical information recording carrier as defined in claim 1 wherein the substrate made of transparent moldable plastic is formed with polycarbonate resin.

4. The optical information recording carrier as defined in claim 1 wherein an outer surface protection layer (5) made of inorganic glass is further formed on the outer surface of the transparent plastic substrate at the side opposite to the high-density information recording layer.

**Revendications**

1. Support d'enregistrement d'information optique, comprenant :
   (a) un substrat en une matière plastique (1) moulable et transparente, à l'exclusion du polyméthylméthacrylate,
   (b) une couche d'enregistrement d'information à haute densité (3) en un alliage amorphe de terre rare/métal de transition, disposée sur ledit substrat, et
   (c) une couche (2) de film mince ayant une épaisseur comprise entre 10 et 200 nm (100-2 000 Å), en un verre non-organique et non-alcalin, à l'exclusion d'un verre quartzeux, disposée entre ledit substrat et ladite couche d'enregistrement d'information à haute densité.

2. Support d'enregistrement d'information optique suivant la revendication 1, dans lequel une couche de protection superficielle (4) en verre non-organique est en outre formée sur la surface de la couche d'enregistrement d'information à haute densité, du côté opposé à la couche de verre non-organique.

3. Support d'enregistrement d'information optique suivant la revendication 1, dans lequel le substrat en matière plastique moulable et transparente est formé d'une résine de polycarbonate.

4. Support d'enregistrement d'information optique suivant la revendication 1, dans lequel une couche de protection superficielle extérieure (5) en verre non-organique est en outre formée sur la surface extérieure du substrat en matière plastique transparente, du côté opposé à la couche d'enregistrement d'information à haute densité.

**EP 0 163 810 B1**

**Patentansprüche**

1. Ein optischer Informationsaufzeichnungsträger mit
   (a) einem Substrat aus einem transparanten formbaren Kunststoff (1), wobei Polymethylmethacrylat ausgeschlossen ist,
   (b) einer Hochdichte-Informationsaufzeichungsschicht (3) aus einer amorphen Seltenerde/Übergangsmetall-Legierung, die auf dem Substrat vorgesehen ist, und
   (c) einer Dünnfilmschicht (2) einer Dicke im Bereich von 10 bis 200 nm (100 bis 2000 Å) aus einem anorganischen Nicht-Alkaliglas, wobei Quarzglas augeschlossen ist, wobei die Dünnfilmschicht zwischen dem Substrat und der Hochdichte-Informationsaufzeichnungsschicht angeordnet ist.

2. Der optische Informationsaufzeichnungsträger gemäß Anspruch 1, wobei eine Oberflächenschutzschicht (4) aus anorganischem Glas zusätzlich auf der Oberfläche der Hochdichte-Informationsaufzeichnungsschicht auf der Seite ausgebildet ist, die der Schicht aus anorganischem Glas gegenüberliegt.

3. Der optische Informationsaufzeichnungsträger gemäß Anspruch 1, wobei das Substrat aus dem transparenten formbaren Kunststoff unter Verwendung von Polykarbonatharz ausgebildet ist.

4. Der optische Informationsaufzeichnungsträger gemäß Anspruch 1, bei dem eine äußere Oberflächenschutzschicht (5) aus anorganischem Glas zusätzlich auf der Außenfläche des transparenten Kunststoffsubstrats auf der Seite ausgebildet ist, die der Hochdichte-Informationsaufzeichnungsschicht gegenüberliegt.

9

*Fig. 1*

*Fig. 2*

Elapsed Time